# EUROPÄISCHE PATENTSCHRIFT

(11) **EP 3 707 413 B1**
(45) Veröffentlichungstag und Bekanntmachung des Hinweises auf die Patenterteilung: **25.08.2021**
(21) Anmeldenummer: 18793657.0
(22) Anmeldetag: 26.10.2018
(51) Int. Cl.: F16H 57/08, F16H 1/28

(54) **PLANETENTRÄGER MIT FLEXIBLEN BOLZEN**
PLANETARY CARRIER HAVING FLEXIBLE BOLTS
PORTE-SATELLITES À AXE FLEXIBLE

(30) Priorität: 06.11.2017 DE 102017219614
(43) Veröffentlichungstag der Anmeldung: 16.09.2020
(73) Patentinhaber: ZF Friedrichshafen AG, 88046 Friedrichshafen (DE); ZF Wind Power Antwerpen NV, 3920 Lommel (BE)
(72) Erfinder: SMOOK, Warren, 3040 Huldenberg (BE)
(74) Vertreter: ZF Friedrichshafen AG
(86) Internationale Anmeldenummer: PCT/EP2018/079414
(87) Internationale Veröffentlichungsnummer: WO 2019/086343

(56) Entgegenhaltungen:
- EP-A1- 0 054 280
- EP-A1- 2 252 809
- GB-A- 423 538
- US-A- 3 943 787
- US-A- 5 649 879

## Beschreibung

Die Erfindung betrifft einen Planetenträger nach dem Oberbegriff von Anspruch 1.

Eine Möglichkeit, die übertragbare Leistung eines Planetengetriebes zu erhöhen besteht darin, die Anzahl der Planetenräder zu vergrößern. Dadurch verringert sich allerdings der Abstand zwischen benachbarten Planetenrädern. Dies ist problematisch, wenn zwischen den Planetenrädern Stege verlaufen, welche die beiden Wangen des Planetenträgers miteinander verbinden.

Fehlen die Stege eines Planetenträgers, müssen sämtliche Kräfte zwischen den beiden Wangen über die Planetenbolzen übertragen werden. Infolge dessen kommt es zu Verformungen der Planetenbolzen. Dies wiederum führt zu einer Fehlausrichtung der Planetenträger.

Die Fehlausrichtung lässt sich bei der Verzahnungsberechnung berücksichtigen. Die Geometrie der Verzahnung wird dabei an eine bei einer bestimmten Belastung auftretende Fehlausrichtung angepasst, so dass die Fehlausrichtung in der Verzahnung kompensiert wird.

Durch eine Verzahnungskorrektur lassen sich Fehler im Zahneingriff bei einer bestimmten Belastung kompensieren. Bei davon abweichender Belastung, kommt es aber erneut zu Fehlern im Zahneingriff. Dies ist insbesondere bei Getrieben für Windkraftanlagen unbefriedigend, da diese permanent wechselnde Belastungen bewältigen müssen.

Aus dem Stand der Technik sind sogenannte Flex Pins bekannt. Flex Pins werden etwa in der Offenlegungsschrift DE 1500451 und EP2252809A1 beschrieben. Bei einem Flex Pin handelt es sich um einen flexiblen Planetenbolzen, der lastbedingte Verformungen ausgleicht und so Fehlstellungen eines Planetenrads verhindert. Ein Flex Pin besteht aus einem flexiblen Zapfen, auf dem eine Buchse montiert ist. Auf der Buchse ist ein Planetenrad drehbar gelagert. Verformt sich der Zapfen, wird dies durch eine Verkippung der Buchse ausgeglichen.

Der Zapfen ist in einer Wange des Planetenträgers fixiert. Hierbei handelt es sich um die einzige Wange des Planetenträgers. Die Verwendung einer zweiten Wange, die notwendig wäre, um höhere Belastungen aufzunehmen, ist aufgrund des Aufbaus eines Flex Pins nicht möglich. Dies vermindert die Belastbarkeit des Planetenträgers.

Die Druckschrift WO 11047448 A1 offenbart einen Planetenträger mit zwei Wangen und einer Buchse, die beidseitig in jeweils einer Wange fixiert ist. Die Buchse dient als Planetenbolzen. In die Buchse ist ein Zapfen eingeschraubt, der keine tragende Funktion erfüllt.

Der Erfindung liegt die Aufgabe zugrunde, die den aus dem Stand der Technik bekannten Lösungen innewohnenden Nachteile zu eliminieren. Insbesondere soll die Belastbarkeit eines Planetengetriebes bei verbesserter Eignung für wechselnde Belastungen erhöht werden.

Diese Aufgabe wird gelöst durch einen Planetenträger nach Anspruch 1. Bevorzugte Weiterbildungen sind in den Unteransprüchen enthalten.

Der Planetenträger weist eine erste Wange und eine zweite Wange auf. Bei einer Wange handelt es sich um eine Stützstruktur, in der Planetenbolzen fixiert sind. Ein drehbarer Planetenträger ist gewöhnlich mit jeder Wange drehbar in einer drehfesten Struktur, etwa einem Getriebegehäuse, gelagert.

Die Planetenbolzen des erfindungsgemäßen Planetenträgers werden durch jeweils einen Zapfen und eine Buchse gebildet. Entsprechend weist der Planetenträger mindestens einen Zapfen und mindestens eine Buchse auf.

Bei einer Buchse handelt es sich um einen rotationssymmetrischen Körper mit einem ersten Hohlraum. Der erste Hohlraum und der Körper sind um eine gemeinsame Achse rotationssymmetrisch. Weiterhin ist der erste Hohlraum geöffnet, weist also genau eine Öffnung auf. Die Öffnung ist zu derselben Achse rotationssymmetrisch.

Insbesondere kann mindestens ein Teil der Buchse die Form eines Hohlzylinders haben.

Die Buchse und der Zapfen bilden zusammen einen Planetenbolzen. Die Buchse dient dabei der Aufnahme mindestens eines Planetenrads. Das Planetenrad ist vorgesehen, drehbar in der Buchse gelagert zu werden. Eine Drehachse des Planetenrads entspricht dabei der Symmetrieachse der Buchse. Die Buchse bildet entweder einen Innenring eines Lagers, mit dem das Planentenrad in der Buchse gelagert ist, oder einen Lagersitz, auf dem ein Innenring des Lagers fixiert werden kann. Entsprechend hat ein Teil der Oberfläche der Buchse vorzugsweise die Form einer Mantelfläche eines geraden Kreiszylinders.

Bevorzugt ist neben der Buchse auch der Zapfen rotationssymmetrisch zu der Drehachse des Planetenrads.

Der Zapfen weist zwei axiale Enden auf - ein erstes Ende und ein zweites Ende. Insgesamt besteht der Zapfen aus drei Stücken: dem ersten Ende, dem zweiten Ende und einem Zwischenstück. Das erste Ende und das zweite Ende sind axial voneinander beabstandet. Zwischen dem ersten Ende und dem zweiten Ende befindet sich das Zwischenstück, das die beiden Enden miteinander verbindet.

Insbesondere kann sich das Zwischenstück zwischen einer ersten und einer zweiten Ebene befinden, die radial verlaufen, d.h. die orthogonal zu der Drehachse des Planetenrads ausgerichtet sind. Das erste Ende des Zapfens und das Zwischenstück befinden sich auf unterschiedlichen Seiten der ersten Ebene. Entsprechend befinden sich das zweite Ende des Zapfens und das Zwischenstück auf unterschiedlichen Seiten der zweiten Ebene.

Das erste Ende des Zapfens ist in der ersten Wange fixiert. Die Fixierung ist vorzugsweise starr, d.h. derart ausgeführt, dass das erste Ende des Zapfens relativ zu der ersten Wange unbeweglich ist.

Auch die Buchse weist zwei axiale Enden auf - ein erstes Ende und ein zweites Ende. Insgesamt besteht die Buchse aus drei Stücken: dem ersten Ende, dem zweiten Ende und einem Zwischenstück. Das erste Ende und das zweite Ende sind axial voneinander beabstandet. Zwischen dem ersten Ende und dem zweiten Ende befindet sich das Zwischenstück, das die beiden Enden miteinander verbindet.

Insbesondere kann sich das Zwischenstück zwischen einer dritten und einer vierten Ebene befinden, die radial verlaufen, d.h. die orthogonal zu der Drehachse des Planetenrads ausgerichtet sind. Das erste Ende der Buchse und das Zwischenstück befinden sich auf unterschiedlichen Seiten der dritten Ebene. Entsprechend befinden sich das zweite Ende der Buchse und das Zwischenstück auf unterschiedlichen Seiten der vierten Ebene.

Das erste Ende der Buchse ist in der zweiten Wange fixiert. Auch diese Fixierung ist vorzugsweise starr, d.h. derart ausgeführt, dass das erste Ende der Buchse relativ zu der zweiten Wange unbeweglich ist.

Mindestens ein Teil des Zapfens ragt durch die Öffnung in den ersten Hohlraum der Buchse hinein. Dies bedeutet umgekehrt, dass mindestens ein Teil der Buchse den Zapfen umschließt. Derselbe Teil bildet auch mindestens einen Teil des ersten Hohlraums aus. Der in die Buchse hineinragende Teil des Zapfens umfasst das zweite Ende des Zapfens. Insbesondere befindet sich das zweite Ende des Zapfens in dem ersten Hohlraum.

Zwischen dem Zapfen und der Buchse verbleibt ein radialer Zwischenraum. Der Zwischenraum verläuft vollständig um die Drehachse des Planetenrads herum. Es handelt sich um einen Teil des ersten Hohlraums, der nicht durch den Zapfen ausgefüllt wird. Die Vorzugsweise ist der Zwischenraum zu der Drehachse rotationssymmetrisch. Dies ist gleichbedeutend damit, dass der mindestens eine Teil des Zapfens axial in der Buchse zentriert ist. Bevorzugt ist mindestens ein Teil des Zwischenraums axial zwischen der ersten Wange bzw. dem Bereich der ersten Wange, in dem das erste Ende des Zapfens fixiert ist, und dem Bereich der Buchse, in dem das zweite Ende des Zapfens fixiert ist, angeordnet.

Der Zwischenraum ist mit einem nachgiebigen Medium gefüllt. Insbesondere kann es sich bei dem Medium um ein Fluid, etwa Schmierstoff und/oder Luft handeln.

Das zweite Ende des Zapfens ist in der Buchse fixiert. Vorzugsweise ist die Fixierung starr, d.h. derart, dass das zweite Ende des Zapfens relativ zu dem Teil der Buchse in dem das zweite Ende fixiert ist, unbeweglich ist.

Erfindungsgemäß ist Buchse ist ausschließlich in der zweiten Wange und in dem Zapfen fixiert. Dies bedeutet, dass das zweite Ende der Buchse freischwebend ist, d.h. das zweite Ende ist ausschließlich über den Mittelteil der Buchse fixiert und wird ausschließlich von dem Mittelteil gehalten. Insbesondere ist das zweite Ende der Buchse weder mit der ersten Wange noch mit dem Zapfen gefügt.

Das zweite Ende der Buchse ist von sämtlichen anderen Komponenten des Planetenträgers beabstandet ist und berührt diese nicht. Das zweite Ende der Buchse und die erste Wange sind axial voneinander beabstandet. Axial zwischen dem zweiten Ende der Buchse und der ersten Wange verläuft also ein freier Zwischenraum bzw. ein Zwischenraum, der mit dem nachgiebigen Medium gefüllt ist.

Der aus dem Zapfen und der Buchse gebildete Planetenbolzen weist die Verformungseigenschaften auf, die denen eines Flex-Pins ähnlich sind. So ist die Buchse in ihrem zweiten Ende relativ zu dem Zapfen verkippbar. Dadurch, dass eine zweite Wange vorgesehen ist, die bei Flex Pins nicht vorhanden ist, erhöht sich die Belastbarkeit. Zudem ermöglicht es die Erfindung, die axiale Position des Orts, in dem das zweite Ende des Zapfens in der Buchse fixiert ist, zu variieren. Auf diese Weise lässt sich das Verformungsverhalten gezielt modifizieren und den auftretenden Belastungen anpassen.

Stege, welche zwischen der ersten Wange und der zweite Wange verlaufen und die erste Wange und die zweite Wange kraftleitend miteinander verbinden, können kleiner dimensioniert werden. Dadurch vergrößert sich dadurch der für die Anordnung von Planetenrädern zur Verfügung stehende Bauraum, sodass die Planetenräder größer dimensioniert und/oder deren Anzahl erhöht werden kann. Dies geht zu Lasten der Torsionssteifigkeit des Planetenträgers. Damit einhergehende Verformungen des Planetenträgers werden aber durch die Flexibilität des aus Buchse und Zapfen gebildeten Planetenbolzens ausgeglichen.

Darüberhinausgehend ist es möglich, auf Stege zwischen der ersten Wange und der zweiten Wange gänzlich zu verzichten. Ein entsprechender Planetenträger weist also keinerlei solche Stege auf. Bei sämtlichen kraftleitenden Verbindungen zwischen der ersten Wange und der zweiten Wange handelt es sich dann um Planetenbolzen mit einem Zapfen und einer Buchse der oben beschriebenen Art, d.h. die Planetenbolzen übernehmen die Aufgaben der Stege.

Vorzugsweise bildet die Buchse eine radial verlaufende Wandung aus, die den ersten Hohlraum axial begrenzt. Die Wandung ist bevorzugt durchgehend, d.h. frei von Löchern oder Durchbrüchen, ausgeführt. Sie dient der Aufnahme und Fixierung des zweiten Endes des Zapfens.

Die erste Wange und der Zapfen können in bevorzugten Weiterbildungen physisch voneinander getrennte Teile bilden oder einstückig miteinander verbunden sein. Ebenso kann es sich bei der zweiten Wange und der Buchse in bevorzugten Weiterbildungen um physisch voneinander getrennte Teile handeln, oder die zweite Wange und die Buchse in einer bevorzugten Weiterbildung können einstückig miteinander verbunden sein.

Die Montage des Planetenträgers bei einstückiger Ausführung von erster Wange und Zapfen sowie zweiter Wange und Buchse beschränkt sich auf die Fixierung des zweiten Endes des Zapfens in der Buchse. Im Einzelnen lässt sich der Planetenträger montieren, in dem das Planetenrad mit einem Planetenlager auf der Buchse montiert wird. Anschließend wird der Zapfen mit seinem zweiten Ende in die Buchse eingesteckt und fixiert. Dies impliziert, dass der Zapfen und die Buchse physisch voneinander getrennt ausgeführt sind.

Um die beschriebene Montage zu ermöglichen, sind in einer bevorzugten Weiterbildung zudem die erste Wange und die zweite Wange als separat, d.h. physisch voneinander getrennt ausgeführt. Insbesondere sind die erste Wange und die zweite Wange nicht einstückig miteinander verbunden.

In einer alternativ bevorzugten Weiterbildung können die erste Wange und die zweite Wange - etwa mittels Stegen - einstückig verbunden sein. Dies entspricht dem Aufbau eines konventionellen Planetenträgers mit Bolzenaufnahmen, in welche die Planetenbolzen eingeführt werden. Die erste Wange und der zapfen sowie die zweite Wange und die Buchse sind dann jeweils als separate Teile ausgeführt.

Neben dem ersten Hohlraum bildet die Buchse erfindungsgemäß einen zweiten Hohlraum aus. Auch der zweite Hohlraum ist bevorzugt rotationssymmetrisch zu der Drehachse des Planetenrads. Die oben beschriebene Wandung trennt den ersten Hohlraum und den zweiten Hohlraum voneinander. Die Wandung erstreckt sich also zwischen dem ersten Hohlraum und dem zweiten Hohlraum. Durch den zweiten Hohlraum verläuft erfindungsgemäß mindestens eine Versteifungsrippe.

Durch die Versteifungsrippe lässt sich die Steifigkeit des Planetenbolzens partiell erhöhen und so dessen Verformungsneigung in einer bestimmten Richtung gezielt vermindern.

Um Verformungen entgegenzuwirken, die bei einer Schrägverzahnung auftreten, verläuft die Versteifungsrippe vorzugsweise radial, d.h. orthogonal zu der Drehachse des Planetenrads. Eine in der Verzahnung auftretende Radialkraft belastet den Planetenbolzen mit einem Drehmoment, das zu einer Verformung der Buchse in Richtung einer Drehachse des Planetenträgers führen würde. Die Versteifungsrippe wirkt dieser Verformung entgegen.

Der zweite Hohlraum ist vorzugsweise offen, d.h. weist eine Mündung auf. Durch die Mündung können Schrauben zur Fixierung des zweiten Endes des Zapfens in der Wandung eingebracht werden.

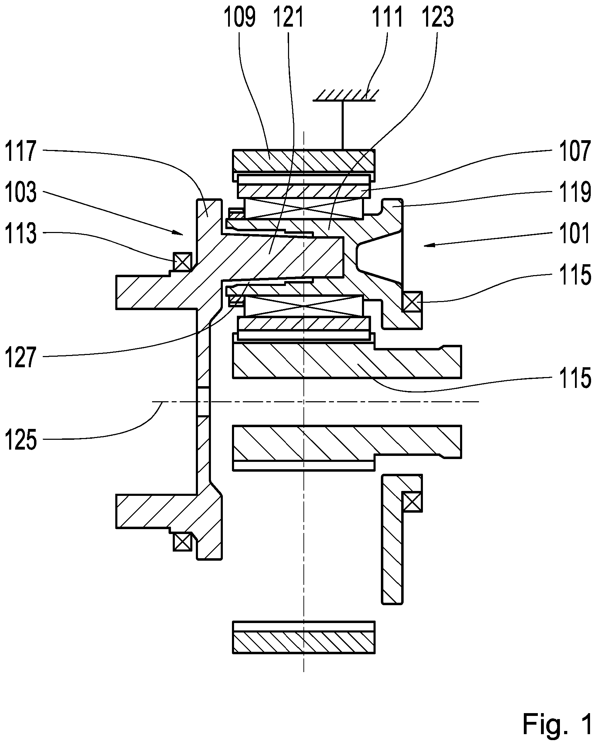

Ein bevorzugtes Ausführungsbeispiel der Erfindung ist in Fig. 1 dargestellt. Übereinstimmende Bezugsziffern kennzeichnen dabei gleiche oder funktionsgleiche Merkmale Im Einzelnen zeigt:
Fig. 1 eine Planetenstufe; und
Fig. 2 Verstärkungsrippen.

Die in Fig. 1 dargestellte Planetenstufe 101 umfasst einen Planetenträger 103, ein Sonnenrad 105, Planetenräder 107 und ein Hohlrad 109. Das Hohlrad 109 ist drehfest in einem Getriebegehäuse 111 fixiert. Mittels eines ersten Lagers 113 und eines zweiten Lagers 115 ist der Planetenträger 103 drehbar gelagert. Ebenso ist das Sonnenrad 105 drehbar. Das Planetenrad 107 ist drehbar auf dem Planetenträger 103 gelagert und kämmt mit dem Sonnenrad 105 sowie mit dem Hohlrad 109.

Der Planetenträger 103 ist zweistückig ausgeführt und besteht aus einem ersten Teil 117 und einem zweiten Teil 119. Beide Teile 117, 119 sind formschlüssig miteinander verbunden. Der erste Teil 117 ist mittels des ersten Lagers 113 gelagert. Mittels des zweiten Lagers 115 ist entsprechend der zweite Teil 119 gelagert.

Der erste Teil 117 bildet einstückig Zapfen 121 aus. Zu jedem Zapfen 121 bildet der zweite Teil 119 einstückig eine Buchse 123 aus. Der Zapfen 121 greift in die Buchse 123 ein und ist dort formschlüssig fixiert.

Der Planetenträger 103 und das Sonnenrad 105 sind um eine gemeinsame Drehachse 125 drehbar. Orthogonal zu der Drehachse 125 gerichtete Kräfte, die auf den Zapfen 121 wirken, führen zu einer Verbiegung desselben. Dies ist erwünscht, da durch die Verbiegung ein Lastausgleich in der Planetenstufe 101 herbeigeführt werden kann.

Ein Zwischenraum 127, der zwischen dem Zapfen 121 und der Buchse 123 verläuft, ermöglicht eine Verkippung der Buchse 123 gegenüber dem Zapfen 121. Nach dem Prinzip eines Flex Pins lässt sich so die Winkellage der Buchse 123 bei einer Drehmomentbelastung der Planetenstufe 101 konstant halten.

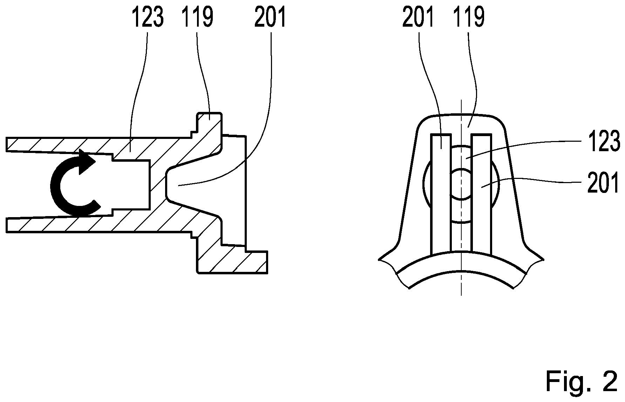

Ist die Planetenstufe 101 schrägverzahnt ausgeführt, ruft eine Belastung der Planetenstufe 101 mit einem in Richtung der Drehachse 125 verlaufenden Drehmoment eine Kraft hervor, die innerhalb der Bildebene der Fig. 1 parallel zu der Drehachse 125 verläuft. Auch diese Kraft führt zu einer Verbiegung des Zapfens 121. Die Folge ist eine Winkelfehlstellung des Planetenrads 107, die mit einem mangelhaften Zahneingriffs einhergeht. Um den entgegenzuwirken, sind in Fig. 2 dargestellt Verstärkungsrippen 201 vorgesehen.

Pro Buchse 123 gibt es hier zwei Verstärkungsrippen 201. Die Verstärkungsrippen 201 verlaufen bezüglich der Drehachse 125 radial. Sie stützen die Buchse 123 am zweiten Teil 119 des Planetenträgers 103 ab und wirken so einer Verkippung der Buchse 123 in genau eine Richtung - in Richtung der Bildebene von Fig. 1- entgegen. Orthogonal dazu ist die Buchse 123 unverändert verkippbar.

### Bezugszeichen

- 101: Planetenstufe
- 103: Planetenträger
- 105: Sonnenrad
- 107: Planetenrad
- 109: Hohlrad
- 113: erstes Lager
- 115: zweites Lager
- 117: erster Teil des Planetenträgers
- 119: zweiter Teil des Planetenträgers
- 121: Zapfen
- 123: Buchse
- 125: Drehachse
- 127: Zwischenraum
- 201: Versteifungsrippe

## Patentansprüche

1. Planetenträger (103) mit einer ersten Wange, einer zweiten Wange, mindestens einem Zapfen (121) und mindestens einer Buchse (123); wobei
ein erstes axiales Ende des Zapfens (121) in der ersten Wange fixiert ist; wobei
ein erstes axiales Ende der Buchse (123) in der zweiten Wange fixiert ist; wobei mindestens ein Teil des Zapfens (121) in die Buchse (123) hineinragt; wobei
ein zweites axiales Ende des Zapfens (121) in der Buchse (123) fixiert ist; und wobei ein zweites axiales Ende der Buchse (123) freischwebend ist; **dadurch gekennzeichnet, dass**
die Buchse (123) mindestens einen ersten Hohlraum und einen zweiten Hohlraum ausbildet; wobei
der mindestens eine Teil des Zapfens (121) in den ersten Hohlraum hineinragt; wobei die Buchse (123) eine Wandung ausbildet, die den ersten Hohlraum und den zweiten Hohlraum voneinander trennt; und wobei
mindestens eine Versteifungsrippe (201) durch den zweiten Hohlraum verläuft.

2. Planetenträger (103) nach Anspruch 1; **dadurch gekennzeichnet, dass**
die erste Wange und der Zapfen (121) einstückig miteinander verbunden sind.

3. Planetenträger (103) nach Anspruch 1, **dadurch gekennzeichnet, dass**
die erste Wange und der Zapfen (121) als separate Teile ausgeführt sind.

4. Planetenträger (103) nach einem der vorhergehenden Ansprüche; **dadurch gekennzeichnet, dass**
die zweite Wange und die Buchse (123) einstückig miteinander verbunden sind.

5. Planetenträger (103) nach einem der Ansprüche 1 bis 3; **dadurch gekennzeichnet, dass**
die zweite Wange und die Buchse (123) als separate Teile ausgeführt sind.

6. Planetenträger (103) nach einem der vorhergehenden Ansprüche; **dadurch gekennzeichnet, dass**
die erste Wange und die zweite Wange als separate Teile ausgeführt sind.

7. Planetenträger (103) nach einem der Ansprüche 1 bis 5; **dadurch gekennzeichnet, dass**
die erste Wange und die zweite Wange einstückig miteinander verbunden sind.

## Claims

1. Planetary carrier (103) having a first flange, a second flange, at least one pin (121) and at least one bush (123); wherein
a first axial end of the pin (121) is fixed in the first flange; wherein
a first axial end of the bush (123) is fixed in the second flange; wherein
at least one part of the pin (121) protrudes into the bush (123); wherein
a second axial end of the pin (121) is fixed in the bush (123); and wherein
a second axial end of the bush (123) is freely suspended;
**characterized in that**
the bush (123) configures at least one first cavity and one second cavity; wherein
the at least one part of the pin (121) protrudes into the first cavity; wherein
the bush (123) configures a wall which separates the first cavity and the second cavity from one another; and wherein
at least one reinforcement rib (201) runs through the second cavity.

2. Planetary carrier (103) according to Claim 1, **characterized in that** the first flange and the pin (121) are integrally connected to one another.

3. Planetary carrier (103) according to Claim 1, **characterized in that** the first flange and the pin (121) are embodied as separate parts.

4. Planetary carrier (103) according to one of the preceding claims,
**characterized in that** the second flange and the bush (123) are integrally connected to one another.

5. Planetary carrier (103) according to one of Claims 1 to 3,
**characterized in that** the second flange and the bush (123) are embodied as separate parts.

6. Planetary carrier (103) according to one of the preceding claims,
**characterized in that** the first flange and the second flange are embodied as separate parts.

7. Planetary carrier (103) according to one of Claims 1 to 5,
**characterized in that** the first flange and the second flange are integrally connected to one another.

## Revendications

1. Porte-satellites (103) comprenant une première joue, une deuxième joue, au moins un tenon (121) et au moins une douille (123) ;
une première extrémité axiale du tenon (121) étant calée dans la première joue ;
une première extrémité axiale de la douille (123) étant calée dans la deuxième joue ;
au moins une partie du tenon (121) faisant saillie dans la douille (123) ;
une deuxième extrémité axiale du tenon (121) étant calée dans la douille (123) ; et
une deuxième extrémité axiale de la douille (123) étant suspendue librement ; **caractérisé en ce que**
la douille (123) forme au moins un premier espace creux et un deuxième espace creux ;
l'au moins une partie du tenon (121) faisant saillie dans le premier espace creux ;
la douille (123) formant une paroi qui sépare le premier espace creux et le deuxième espace creux l'un de l'autre ; et
au moins une nervure de raidissement (201) s'étendant à travers le deuxième espace creux.

2. Porte-satellites (103) selon la revendication 1, **caractérisé en ce que** la première joue et le tenon (121) sont reliés d'un seul tenant l'un à l'autre.

3. Porte-satellites (103) selon la revendication 1, **caractérisé en ce que** la première joue et le tenon (121) sont réalisés en tant que pièces séparées.

4. Porte-satellites (103) selon l'une des revendications précédentes, **caractérisé en ce que** la deuxième joue et la douille (123) sont reliées d'un seul tenant l'une à l'autre.

5. Porte-satellites (103) selon l'une des revendications 1 à 3, **caractérisé en ce que** la deuxième joue et la douille (123) sont réalisées en tant que pièces séparées.

6. Porte-satellites (103) selon l'une des revendications précédentes, **caractérisé en ce que** la première joue et la deuxième joue sont réalisées en tant que pièces séparées.

7. Porte-satellites (103) selon l'une des revendications 1 à 5, **caractérisé en ce que** la première joue et la deuxième joue sont reliées d'un seul tenant l'une à l'autre.
